# EUROPEAN PATENT APPLICATION

(11) **EP 0 892 173 A1**
(43) Date of publication of application: **20.01.1999**
(21) Application number: 98202252.7
(22) Date of filing: 04.07.1998
(51) Int. Cl.: F03B 1/02

(54) **Process for manufacturing hydraulic turbine wheels and the wheels obtained thereby**

(30) Priority: 18.07.1997 IT MI971710
(71) Applicant: Voith Riva Hydro S.p.A., 20144 Milano (IT)
(72) Inventor: Meazza, Gianpiero, 20075 Lodi (IT); Rovaro Brizzi, Mario, 20145 Milano (IT)
(74) Representative: Zanardo, Giovanni

(57) **Abstract**

In order to obtain a Pelton wheel (1) which offers a good compromise between mechanical features and costs, its manufacturing process comprises the following steps: a step in which a monolithic element (2) formed by the hub (3) and by a portion (4) of each blade (5) is produced, a step in which the remaining portion (6) of each blade (5) is executed in at least one piece and a step in which each portion (6) of blade (5) present on the hub (3) is fixed, by welding, to the corresponding remaining portion (6) of blade (5) executed separately.

## Description

The present invention relates to a process for manufacturing hydraulic turbine wheels and to the wheels obtained thereby.

The processes for manufacturing hydraulic turbine wheels can substantially be classified according to the two types of wheels produced: a monolithic wheel and a composite wheel. In both cases there are advantages and disadvantages which will be briefly mentioned, since said processes are well known to the skilled in the art.

The monolithic wheels can be subject (even frequently) to casting defects, particularly at the base of the blade which is the most stressed area, said defects requiring additional machining and therefore additional costs.

Since the wheel material is usually martensitic stainless steel (13/4), the additional machining requires the execution of difficult welding operations by highly skilled workers and the subsequent heat treatment of the whole wheel. It is therefore possible that the wheel manufacturing shall require more time than expected which is difficult to evaluate. The supply of the wheels can then be delayed with all the possible consequences.

The difficulty to cast defect-free monolithic wheels has led the manufacturers to produce composite wheels. Said process (currently used) provides the hub separately from the blades which are then, one by one or in groups, fixed to said hub by means of bolts or by welding. The substantial geometric simplicity and the smaller diameter of the hub reduce the possibility of casting defects; however, the operation of fixing the blades to the hub is a source of problems, independently of the way the operation is performed. If the fixing of the blades is executed by means of bolts, said bolts are usually highly stressed, since, due to the lack of space and material around the bores, they can not exceed certain values of the diameter. If the fixing of the blades is executed by welding, it is possible that said welding has less strength than expected because of cracks which can easily occur during welding of very thick parts. Further, the area of junction of the blades to the hub is the most stressed one. In this case there is then the need to perform the proper controls with all the associated costs.

The above mentioned disadvantages are presently overcome by choosing a monolithic or a composite wheel according to the type of plant in order to exploit the advantages provided by either one of the embodiments, on a case by case basis. The problems so far illustrated are very significant indeed. EP-A-0 496 181 suggests overcoming said problems by executing, or completing, each blade of the Pelton wheel just by welding, i.e. by means of a sequential and predetermined (using a computer) overlap of weld beads until said blade is formed. Despite this process executes a wheel which solves most of the disadvantages of the previous methods, it is not free of disadvantages itself. For instance, the blade surfaces which come into contact with water according to said process (which, as is known, need to have a very good surface finish in order to maintain the efficiency) can hardly have the required finish level when they are formed just by welding. Therefore, the process has to provide additional finishing operations of all the corresponding portion of blade.

The purpose of the present invention is to provide a process for manufacturing hydraulic turbine blades which eliminates or reduces the above mentioned disadvantages as much as possible so as to obtain a Pelton wheel which shows a good compromise between the mechanical features and the costs.

Said purposes are achieved by a method according to claim 1 and by a Pelton wheel according to claim 8, said claims are herein taken as a reference.

By providing the hub and a portion of each blade directly fixed to the hub, all of the problems connected with the fixing of the blades to the hub are economically overcome. The separate execution of the remaining portion of each blade allows to work on pieces which are all the same and which have reduced dimensions with consequent advantages in terms of precision and speed of execution.

The preceding claims refer to specific embodiments of the invention.

A Pelton wheel according to the invention is shown in the following figures.
Figure 1 is an exploded partial view of a Pelton wheel according to a first embodiment of the invention.
Figure 2 is an exploded partial view of a Pelton wheel according to a second embodiment of the invention.
Figure 3 is an exploded partial view of a Pelton wheel according to a third embodiment of the invention.

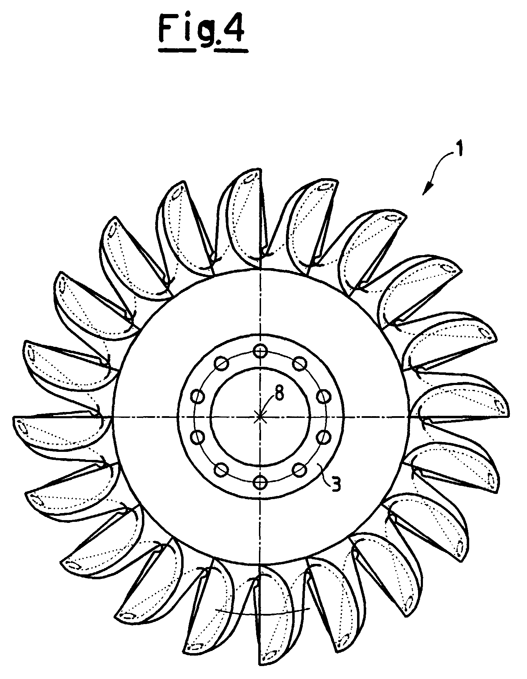

Figure 4 is a side elevation view of a Pelton wheel according to the invention.

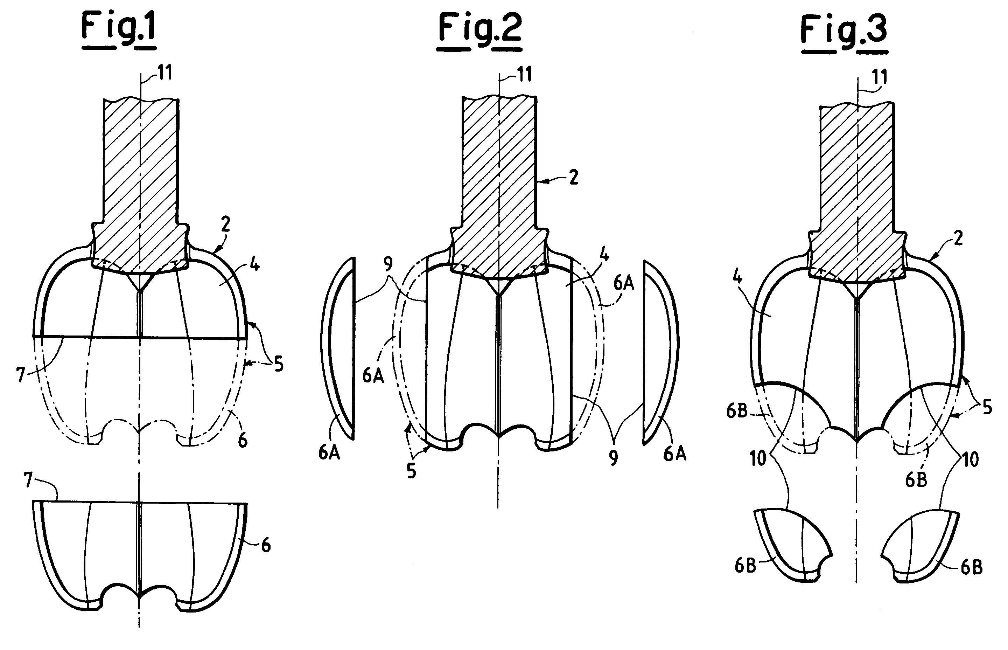

With reference to the above figures, the Pelton wheel of the invention, generally indicated by numeral 1, comprises: a monolithic element 2 formed by the hub 3 and by a portion 4 of each blade 5 and the remaining portion 6 of each blade 5 in at least one piece. Preferably, the monolithic element 2 is obtained by forging while any remaining portion 6 of each blade 5 which is executed separately is obtained by casting with ceramic dies and said remaining portion is subsequently engaged to the portion 4 of the blade 5 on the hub 3 by welding (preferably laser welding). The casting with ceramic dies is the preferred type of casting since it offers a high shape precision and a good surface finish. The separately executed portion 6 of the blade 5 can be fixed to the corresponding portion 4 of blade 5 on the hub 3 through various welding techniques. The portion 6 can have different shapes: just few of them have been shown in the Figures 1-3.

With particular reference to Figure 1, the separately executed portion 6 of the blade 5 is fixed to the corresponding portion 4 of blade 5 present on the hub 3 along an annular plane 7 which is the lateral surface of a cylinder, whose symmetry axis is coincident with the rotation axis 8 of the Pelton wheel 1.

With particular reference to Figure 2, the separately executed portion 6 of the blade 5 comprises two identically mirror-like portions 6A fixed to the corresponding portion 4 of blade 5 present on the hub 3 along corresponding planes 9 which are one another parallel and perpendicular to the rotation axis 8 of the Pelton wheel 1.

With particular reference to Figure 3, the separately executed portion 6 of the blade 5 comprises two identically mirror-like portions 6B fixed to the corresponding portion 4 of blade 5 present on the hub 3 along corresponding curved planes 10 which cross the rotation plane 11 of the Pelton wheel 1.

Then, the Pelton wheel 1 according to the invention is obtained by means of a process which substantially comprises: a step in which a monolithic element 2 formed by the hub 3 and by a portion 4 of each blade 5 is produced, a step in which the remaining portion 6 of each blade 5 is executed in at least one piece, a step in which each portion 4 of the blade 5 present on the hub 3 is fixed by welding to the corresponding, separately executed, remaining portion 6 of the blade 5. The monolithic element 2, formed by the hub 3 and by a portion 4 of each blade 5, is preferably obtained by forging, while each separately executed portion 6 of the blade 5 is preferably obtained by casting with ceramic dies and said portion 6 is subsequently engaged to the portion 4 of the blade 5 on the hub 3 by welding.

## Claims

1. Process for manufacturing hydraulic turbine wheels, characterised by comprising:
- a step in which a monolithic element (2) formed by the hub (3) and by a portion (4) of each blade (5) is produced;
- a step in which the remaining portion (6) of each blade (5) is executed in at least one piece;
- a step in which each portion (4) of the blade (5) present on the hub (3) is fixed by welding to the corresponding, separately executed, remaining portion (6) of the blade (5).

2. Process as claimed in claim 1, characterised in that the monolithic element (2), formed by the hub (3) and by a portion (4) of each blade (5), is obtained by forging.

3. Process as claimed in claim 1, characterised in that each separately executed portion (6) of the blade (5) is obtained by casting with ceramic dies.

4. Process as claimed in claim 1, characterised in that the separately executed portion (6) of the blade (5) is engaged to the portion (4) of the blade (5) present on the hub (3) by laser welding.

5. Process as claimed in claim 1, characterised in that the separately executed portion (6) of the blade (5) is fixed to the portion (4) of the blade (5) present on the hub (3) along an annular plane (7) which is the lateral surface of a cylinder, whose symmetry axis is coincident with the rotation axis (8) of the Pelton wheel (1).

6. Process as claimed in claim 1, characterised in that the separately executed portion (6) of the blade (5) comprises two identically mirror-like portions (6A) which are fixed to the corresponding portion (4) of the blade (5) present on the hub (3) along corresponding planes (9) which are one another parallel and perpendicular to the rotation axis (8) of the Pelton wheel (1).

7. Process as claimed in claim 1, characterised in that the separately executed portion (6) of the blade (5) comprises two identically mirror-like portions (6B) which are fixed to the corresponding portion (4) of the blade (5) present on the hub (3) along corresponding curved planes (10) which cross the rotation plane (11) of the Pelton wheel (1).

8. Pelton wheel characterised by comprising: a monolithic element (2) formed by the hub (3) and by a portion (4) of each blade (5), and by the remaining portion (6) of each blade (5), in which said portion (6) can be engaged to the portion (4) of the blade (5) of the monolithic element (2).

9. Pelton wheel as claimed in claim 8, characterised in that the monolithic element (2), formed by the hub (3) and by a portion (4) of each blade (5), is obtained by forging.

10. Pelton wheel as claimed in claim 8, characterised in that each portion (6) of the blade (5) is separately executed in at least one piece and is obtained by casting with ceramic dies.

11. Pelton wheel as claimed in claim 8, characterised in that the separately executed portion (6) of the blade (5) is engaged to the portion (4) of the blade (5) present on the hub (3) by laser welding.

12. Pelton wheel as claimed in claim 8, characterised in that the separately executed portion (6) of the blade (5) is fixed to the corresponding portion (4) of the blade (5) present on the hub (3) along an annular plane (7) which is the lateral surface of a cylinder, whose symmetry axis is coincident with the rotation axis (8) of the Pelton wheel (1).

13. Pelton wheel as claimed in claim 8, characterised in that the separately executed portion (6) of the blade (5) comprises two identically mirror-like portions (6A) which are fixed to the corresponding portion (4) of the blade (5) present on the hub (3) along corresponding planes (9) which are parallel and perpendicular to the rotation axis (8) of the Pelton wheel (1).

14. Pelton wheel as claimed in claim 8, characterised in that the separately executed portion (6) of the blade (5) comprises two identically mirror-like portions (6B) which are fixed to the corresponding portion (4) of the blade (5) present on the hub (3) along corresponding curved planes (10) which cross the rotation plane (11) of the Pelton wheel (1).
